# EUROPÄISCHE PATENTSCHRIFT

(11) **EP 0 626 786 B1**
(45) Veröffentlichungstag und Bekanntmachung des Hinweises auf die Patenterteilung: **19.05.1999**
(21) Anmeldenummer: 94106160.8
(22) Anmeldetag: 21.04.1994
(51) Int. Cl.: H04N 5/46

(54) **Verfahren und Schaltung zur Tonnorm-Erkennung in einem Fernsehempfänger**
Method and circuit for recognising the sound standard in a television receiver
Méthode et circuit de reconnaissance du standard de son dans un récepteur de télévision

(30) Priorität: 24.05.1993 DE 4317220
(43) Veröffentlichungstag der Anmeldung: 30.11.1994
(73) Patentinhaber: DEUTSCHE THOMSON-BRANDT GMBH, 78048 Villingen-Schwenningen (DE)
(72) Erfinder: Rieger, Martin, D-78628 Rottweil (DE); Roth, Sabine, D-78087 Mönchweiler (DE)
(74) Vertreter: Hartnack, Wolfgang, Dipl.-Ing.

(56) Entgegenhaltungen:
- EP-A- 0 407 802
- WO-A-91/11880
- DE-A- 3 938 303
- GB-A- 2 124 060
- IEEE 1991 INTERNATIONAL CONFERENCE ON CONSUMER ELECTRONICS. DIGEST OF TECHNICAL PAPERS. (CAT. NO.91CH2978-5), ROSEMONT, IL, (US), 5-7 JUNE 1991, PUBLISHED BY IEEE, NEWYORK, (US) Seiten 102 - 103 RIEGER M.A. ET AL 'ADVANCED MULTISTANDARD TV-SOUND IF INTEGRATED CIRCUIT'
- IEEE TRANSACTIONS ON CONSUMER ELECTRONICS, Bd.37, Nr.3, 30. August 1991, NEW YORK US Seiten 476 - 480, XP000263226 HEYMANN R. ET AL 'A WORLD STANDARD VIDEO AND SOUND IF IC'
- IEEE TRANSACTIONS ON CONSUMER ELECTRONICS, Bd.31, Nr.3, 30. August 1985, NEW YORK US Seiten 474 - 484 BUHSE U. 'APPLICATION PROPOSALS FOR MULTISTANDARD SOUND TV-RECEIVERS'
- FERNSEH UND KINO TECHNIK., Bd.40, Nr.6, 30. Juni 1986, BERLIN DE Seiten 242 - 248 BUHSE U. 'Stereo/Zweikanal-Tonstandards und die Verarbeitung von Mehrkanal-Tonsignalen in Multistandard-Fernsehgeräten'

## Beschreibung

Die Erfindung betrifft eine Schaltung zur Tonnorm-Erkennung in einem Fernseh-Empfänger.

Bei einer derartigen Schaltung wird aus dem Signal selbst durch Auswertung charakteristischer Signalgrößen eine Stellgröße gewonnen, die eindeutig die jeweils empfangene Tonnorm anzeigt und eine Stellgröße erzeugt, die selbsttätig die bei den einzelnen Normen notwendigen Umschaltungen im Empfänger auslöst.

GB-A-2 124 060 offenbart ein ähnliche Schaltung, die das gleiche Problem löst. Die Ausführung unterscheidet sich jedoch dadurch, daß eine Mehrzahl von Filtern und Detektorschaltungen verwendet werden.

EP-A-0 407 802 beschreibt einen Demodulator für Multi-Standard-Fernsehsignale. Darin wird eine Referenz-Frequenz verwendet, von der die zu demodulierenden Frequenzen ein Vielfaches sind.
In WO-A-91/11880 ist ebenfalls ein solcher Demodulator beschrieben. Dieser beinhaltet eine zweite Ton-ZF, die unabhängig von der jeweiligen Empfangsnorm in eine konstante Frequenz umgesetzt wird.

Der Erfindung liegt die Aufgabe zugrunde, eine einfache, eindeutig und sicher ansprechende Schaltung zur Normerkennung zu schaffen, die insbesondere leicht in einem integrierten Schaltkreis realisierbar ist. Diese Aufgabe wird durch die in Anspruch 1 angegebene Erfindung gelöst. Vorteilhafte Weiterbildungen der Erfindung sind in den abhängigen Ansprüchen angegeben.

Bei der erfindungsgemäßen Lösung wird die Frequenz des Mischträgers für den ZF-Tonträger periodisch in Stufen geändert. An den Ausgang eines Filters für den erzeugten Träger mit bei allen Normen gleicher Frequenz ist ein Amplituden-Detektor angeschlossen, dessen Ausgang über einen A/D-Wandler an einen Prozessor angeschlossen ist. Dieser erzeugt aus der Zuordnung zwischen dem Auftreten eines Trägers am Ausgang des Filters und der Frequenz des Mischträgers eine die jeweilige Norm kennzeichnende Stellgröße.

Am Ausgang des Filters wird somit festgestellt, ob bei einer bestimmten empfangenen Norm und einer bestimmten Frequenz des Mischträgers ein Signal vorliegt oder nicht. Die Erfindung beruht dabei auf der Erkenntnis, daß der Zusammenhang zwischen dem Auftreten eines Signals am Ausgang des Filters und der jeweiligen Frequenz des Mischträgers für die Umsetzung des Tonträgers bei allen in Frage kommenden Normen unterschiedlich ist. Durch logische Auswertung dieser Zusammenhänge in einem Prozessor kann also eindeutig und mit großer Sicherheit auf die jeweils empfangene Norm geschlossen und eine Schaltspannung für die Normschaltung oder Normanzeige erzeugt werden.

Ein wesentlicher Vorteil der Erfindung besteht darin, daß die Normerkennung durch die logische Auswertung digitaler Signale eindeutig und sicher arbeitet. Der schaltungstechnische Aufwand bleibt relativ gering, weil weitestgehend vorhandene Bauteile für die Signalverarbeitung zusätzlich für die Normerkennung ausgenutzt werden. Die Erfindung ist auch mit geringem Aufwand besonders einfach in einem integrierten Schaltkreis bei Anwendung bereits vorhandener digital arbeitender Bauteile realisierbar.

Die Erfindung wird im folgenden anhand der Zeichnung erläutert. Darin zeigen
- Fig. 1: ein Blockschaltbild eines integrierten Schaltkreises für die Verarbeitung eines Tonträgers mit der erfindungsgemäßen Schaltung und
- Fig. 2: eine Tabelle zur Erläuterung der Wirkungsweise der Schaltung nach Fig. 1.

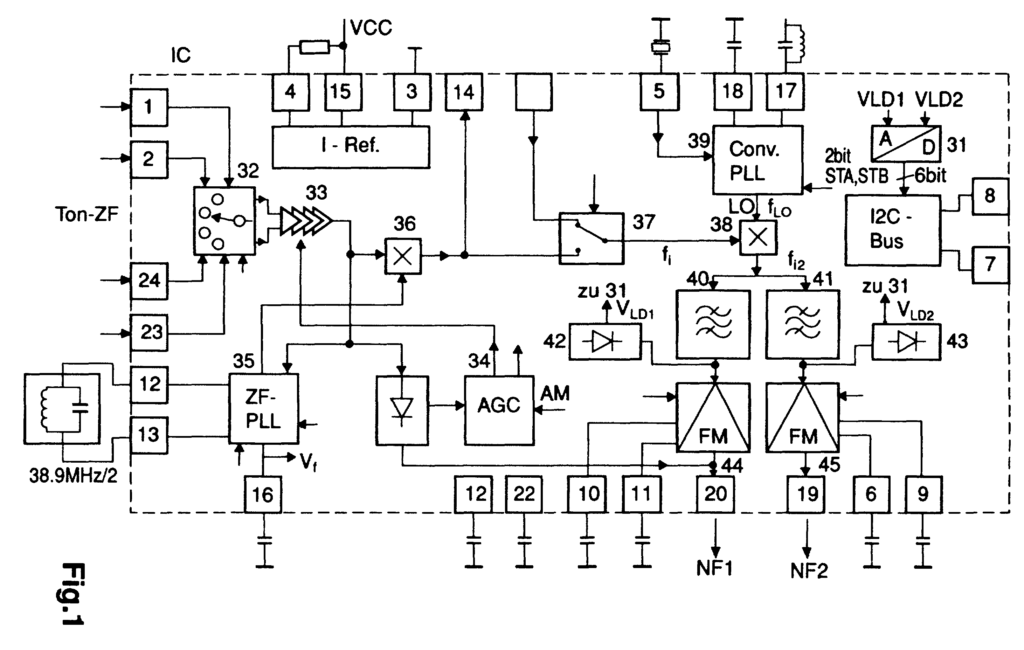

In dem in Fig. 1 dargestellten integrierten Schaltkreis IC können mehrere Funktionen durch einen Mikroprozessor über den I2C-Bus 30 gesteuert werden. Der eingebaute A/D-Wandler 31 dient dazu, einige wichtige Signale dem Mikroprozessor zuzuführen. Mit dem Bus-gesteuerten Eingangsschalter 32 kann eines der Ton-ZF-Eingangsignale an den Pins 1, 2, 24, 23 des IC ausgewählt werden. An einem Eingang für das ZF-Signal kann ein SECAM-L-SAW-Filter und an einem anderen Eingang ein PAL-BG-SAW-Filter vorgesehen sein. Der mit dem Schalter 32 ausgewählte ZF-Tonträger wird in dem von der AGC-Schwundregelschaltung 34 gesteuerten Verstärker 33 verstärkt. Im Standard SECAM-L wird der amplitudenmodulierte Tonträger ohne weitere Umsetzung demoduliert. Für alle anderen Normen erzeugt die ZF-PLL 35 den Bildträger mit der Frequenz fp. Die PLL-Schaltung 35 enthält einen VCO-Oszillator mit einer Frequenz von ½ fp, einen Frequenzverdoppler und einen Phasendetektor. Um Videosignalkomponenten nach der ersten Mischstufe 36 zu unterdrücken, hat der erzeugte Bildträger gegenüber dem empfangenen Bildträger eine Phasenverschiebung von 90°. Der VCO-Oszillator kann von Hand abgeglichen sein. Wie in dem dargestellten IC kann dieser Abgleich auch automatisch durch den Mikroprozessor erfolgen. Am Ausgang der ersten Mischstufe 36 steht der Intercarrier-Tonträger mit einer Frequenz von 5,5 MHz. Dieser Tonträger wird dem Pin 14 für eine NICAM-Weiterverarbeitung zugeführt. Hinter dem Umschalter 37 wird der Tonträger mit der Frequenz fi in der zweiten Mischstufe 38 auf einen Tonträger mit der bei allen Normen gleichen Frequenz fi2 von 500 kHz umgesetzt. Der Mischträger mit der Frequenz fLO für die Mischstufe 38 wird in der PLL-Schaltung 39 mit einem Referenzquarz erzeugt. Der Mischträger LO mit der Frequenz fLO wird entsprechend der jeweils empfangenen Norm durch den Bus ausgewählt. Das Ausgangssignal der Mischstufe 38 mit der Frequenz von 260 kHz dient für ein Zweiträgersystem, z.B. für zwei Sprachen. Der Träger vom Ausgang der Mischstufe 38 wird dem auf 500 kHz abgestimmten Filter 40 und dem auf 260 kHz abgestimmten Filter 41 zugeführt. Die Ausgänge der beiden Filter 40, 41 sind an FM-Demodulatoren 44, 45 angeschlossen, die an den Pins 20, 19 die NF-Tonsignale NF1 und NF2 liefern.

An die Ausgänge der Filter 40, 41 sind außerdem Amplitudendetektoren 42, 43 angeschlossen. Deren die Amplitude der Ausgangssignale der Filter 40, 41 anzeigenden Ausgangsspannungen VLD1 und VLD2 werden über den A/D-Wandler 31 dem Mikroprozessor zugeführt.

Die Verstärkung des vierstufigen Verstärkers 33 wird von der AGC-Schaltung 34 gesteuert. Die AGC-Schaltung 34 erzeugt dafür ein Signal, das dem Pegel des empfangenen ZF-Signals entspricht. Da die Regelspannung dem Mikroprozessor zugeführt wird, kann eine automatische Programmierung des stärksten empfangenen Senders durchgeführt werden. Die Frequenz des freischwingenden VCO-Oszillators kann durch einen Offset-ZF-Strom geändert werden, der durch eine interne DAC bestimmt ist. Die digitale Spannung des Schleifenfilters kann dem Mikroprozessor zugeführt werden.

Im folgenden wird die Tonnorm-Erkennung mit der beschriebenen Schaltung näher erläutert. Für die Normerkennung sind im wesentlichen die Bauteile 30, 31, 42, 43, 38, 39 in Fig. 1 wirksam. Die Ausgangsspannungen VLD1 und VLD2 der Detektoren 42, 43 zeigen an, ob an den Ausgängen der Filter 40, 41 Signale festgestellt wurden oder nicht.

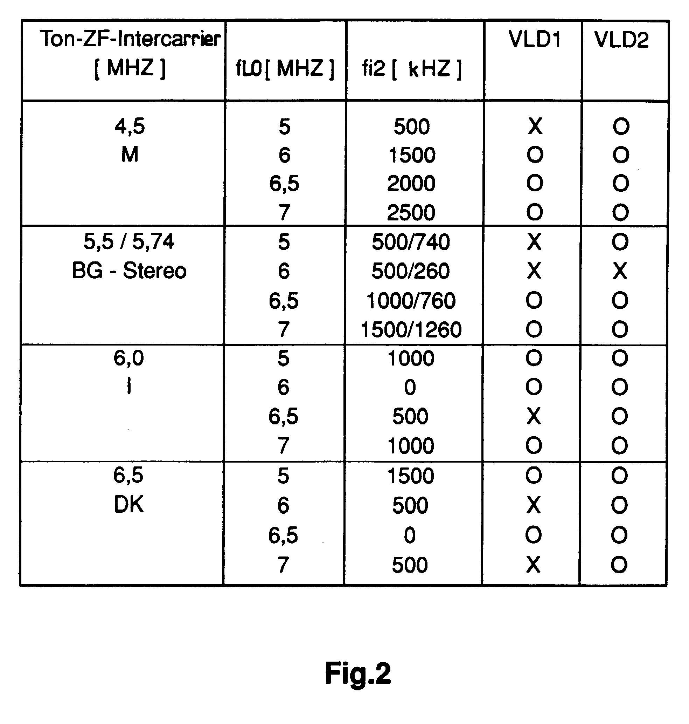

Die weitere Wirkungsweise wird zusammen mit Fig. 2 erläutert. Fig. 2 zeigt in der ersten Spalte vier in der Praxis auftretende Tonnormen mit den zugehörigen Ton-ZF-Intercarrier-Frequenzen. Die zweite Spalte zeigt einzelne Frequenzen für fLO am Ausgang der PLL-Schaltung 39. Die dritte Spalte zeigt die sich daraus ergebenden Frequenzen fi2. In den beiden rechten Spalten bedeutet das "X" jeweils, daß am Ausgang des Filters 40 oder 41 ein Träger vorhanden ist, und "O" bedeutet, daß am Ausgang des Filters 40 oder 41 kein Träger vorhanden ist. Das wird angezeigt durch die Ausgangsspannungen VLD1 und VLD2 an den Ausgängen der Amplitudengleichrichter 42, 43, die dem A/D-Wandler 31 zugeführt werden. Wen VLD=6 Volt ist, bedeutet dies, daß am Ausgang des Filters 40 oder 41 kein Träger steht. Wenn VLD kleiner als 6 Volt ist, bedeutet dies, daß am Ausgang des Filters 40 oder 41 ein Träger vorhanden ist. VLD1 und VLD2 werden im Mikroprozessor ausgewertet, wobei der Schwellwert etwas unter 6 Volt liegt.

Die Frequenz fLO des von der PLL-Schaltung 39 kommenden Mischträgers LO wird jetzt gemäß Fig. 2 automatisch in Stufen von 500 kHz geändert. Fig. 2 zeigt, daß die Zuordnung zwischen den "X" und den Frequenzen fLO und fi2 für alle vier Normen unterschiedlich ist. Aus dieser unterschiedlichen Zuordnung kann daher in dem Mikroprozessor erkannt werden, welche Norm jeweils empfangen wird. Bei der Norm 4,5M tritt z.B. die Spannung VLD1 nur dann auf, wenn fLO = 5 MHz ist, in allen anderen Fällen nicht. Bei der Norm 5,5/5,74 indessen tritt das "X" bei VLD1 sowohl bei fLO = 5 MHz als auch bei fLO = 6 MHz auf. In dem Mikroprozessor kann also eine Spannung erzeugt werden, die die jeweils empfangene der vier insgesamt dargestellten Normen anzeigt. Diese Spannung kann dann die für die einzelnen Normen notwendigen Umschaltungen, z.B. zwischen verschiedenen Demodulationsarten wie AM und FM, Umschaltung von Filtern, von Verstärkungsfaktoren und dgl. einleiten.

Für die Wirkungsweise ist der Amplitudendetektor 43 für die Spannung VLD2 nicht unbedingt erforderlich. Durch VLD2 wird zusätzlich angezeigt, ob es sich um eine Mono-oder Stereo-Tonübertragung handelt. Das beruht darauf, daß die Frequenz fi2 mit 260 kHz nur bei Stereo- oder Mehrsprachenübertragung auftritt. Die gewonnene Spannung kann auch zur Anzeige dienen, welche Norm jeweils empfangen wird.

## Patentansprüche

1. Verfahren zur Ton-Norm-Erkennung in einem Fernsehempfänger, bei der ein Ton-ZF-Träger (fᵢ) und ein Mischträger (LO) veränderbarer Frequenz (f_{LO}) gemischt (38) werden und das Mischsignal (fi2) über ein Filter (40) mit konstanter Durchlaßfrequenz einem Ton-Demodulator (44) zugeführt wird, **dadurch gekennzeichnet,** daß zur Ton-NormErkennung die Frequenz (f_{LO}) des Mischträgers automatisch in Stufen geändert und das Ausgangssignal des Filters (40) einem Amplituden-Detektor (42) zugeführt wird und das A/D-gewandelte (31) Ausgangssignal des Amplituden-Detektors in einem Prozessor ausgewertet wird, der aus der Zuordnung zwischen dem Auftreten eines Trägers am Ausgang des Filters (40) und der jeweiligen Frequenz (f_{LO}) des Mischträgers (LO) eine die jeweilige Ton-Norm kennzeichnende Stellgröße erzeugt.

2. Verfahren nach Anspruch 1, bei dem zur Ton-Norm-Erkennung die Frequenz (f_{LO}) des Mischträgers (LO) in solchen Stufen geändert wird, die gleich dem kleinsten Frequenzunterschied zwischen frequenzmäßig benachbarten Tonträgern der verschiedenen Normen sind.

3. Verfahren nach Anspruch 1 oder 2, bei dem der Mischträger (LO) mittels einer umschaltbaren PLL-Stufe (39) gebildet wird.

4. Verfahren nach einem der Ansprüche 1 bis 3, bei dem das Mischsignal (fᵢ₂) über ein weiteres Filter (41) mit konstanter, unterschiedlicher Durchlaßfrequenz einem weiteren Ton-Demodulator (45) und einem weiteren Amplituden-Detektor (43) zugeführt wird, dessen Ausgangssignal ebenfalls A/D-gewandelt (31) und in dem Prozessor ausgewertet wird.

5. Verfahren nach einem der Ansprüche 1 bis 4, bei dem der Ton-ZF-Träger (fᵢ) ein in einer vorhergehenden Mischstufe (36) gewonnener Intercarrier-Tonträger ist.

6. Verfahren nach einem der Ansprüche 1 bis 5, bei dem die die jeweilige Ton-Norm kennzeichnende Stellgröße zur Umschaltung der Betriebsweise des Fernsehempfängers je nach ermittelter Ton-Norm dient.

7. Verfahren nach einem der Ansprüche 1 bis 6, bei dem die Normalbetriebs-Frequenz (fᵢ₂) des Mischsignals bei allen Ton-Normen 500kHz ist.

8. Schaltung zur Ton-Norm-Erkennung in einem Fernsehempfänger, in der ein Ton-ZF-Träger (fᵢ) und ein Mischträger (LO) veränderbarer Frequenz (f_{LO}) einer Mischstufe (38) zugeführt werden, deren Ausgangssignal (fᵢ₂) über ein Filter (40) mit konstanter Durchlaßfrequenz einem Ton-Demodulator (44) zugeführt wird, **dadurch gekennzeichnet,** daß zur Ton-Norm-Erkennung die Frequenz (f_{LO}) des Mischträgers automatisch in Stufen geändert und das Ausgangssignal des Filters (40) einem Amplituden-Detektor (42) zugeführt wird und das A/D-gewandelte (31) Ausgangssignal des Amplituden-Detektors in einem Prozessor ausgewertet wird, der aus der Zuordnung zwischen dem Auftreten eines Trägers am Ausgang des Filters (40) und der jeweiligen Frequenz (f_{LO}) des Mischträgers (LO) eine die jeweilige Ton-Norm kennzeichnende Stellgröße erzeugt.

## Claims

1. Method for identifying the audio Standard in a television receiver, in which an audio IF carrier (fᵢ) and a variable-frequency (f_{LO}) local-oscillator carrier (LO) are mixed (38) and the mixed signal (fᵢ₂) is fed via a filter (40) with a constant pass frequency to an audio demodulator (44), characterized in that, in order to identify the audio Standard, the frequency (f_{LO}) of the local-oscillator carrier is automatically varied in steps, and the output signal of the filter (40) is fed to an amplitude detector (42), and the A/D-converted (31) output signal of the amplitude detector is evaluated in a processor which uses the association between the occurrence of a carrier of the output of the filter (40) and the respective frequency (f_{LO}) of the local-oscillator carrier (LO) to produce a control variable which characterizes the respective audio Standard.

2. Method according to Claim 1, in which, in order to identify the audio Standard, the frequency (f_{LO}) of the local-oscillator carrier (LO) is varied in steps which are equal to the smallest frequency difference between audio carriers, and adjacent frequencies, of the various Standards.

3. Method according to Claim 1 or 2, in which the local-oscillator carrier (LO) is formed by means of a switchable PLL stage (39).

4. Method according to one of Claims 1 to 3, in which the mixed signal (fᵢ₂) is passed via a further filter (41) having a constant, different pass frequency to a further audio demodulator (45) and to a further amplitude detector (43), whose output signal is likewise A/D-converted (31) and is evaluated in the processor.

5. Method according to one of Claims 1 to 4, in which the audio IF carrier (fᵢ) is an intercarrier audio carrier obtained in an upstream mixing stage (36).

6. Method according to one of Claims 1 to 5, in which the control variable which characterizes the respective audio Standard is used to change the mode of operation of the telephone receiver depending on the audio Standard determined.

7. Method according to one of Claims 1 to 6, in which the normal operating frequency (fᵢ₂) of the mixed signal is 500 kHz for all audio Standards.

8. Circuit for identifying the audio Standard in a television receiver, in which an audio IF carrier (fᵢ) and a local-oscillator carrier (LO) at a variable frequency (f_{LO}) are fed to a mixing stage (38) whose output signal (fᵢ₂) is fed via a filter (40) having a constant pass frequency to an audio demodulator (44), characterized in that in order to identify the audio Standard, the frequency (f_{LO}) of the local-oscillator carrier is automatically varied in steps, and the output signal of the filter (40) is fed to an amplitude detector (42), and the A/D-converted (31) output signal of the amplitude detector is evaluated in a processor which uses the association between the occurrence of a carrier of the output of the filter (40) and the respective frequency (f_{LO}) of the local-oscillator carrier (LO) to produce a control variable which characterizes the respective audio Standard.

## Revendications

1. Procédé de reconnaissance du standard de son dans un récepteur de télévision dans lequel une porteuse MF son (fᵢ) et une porteuse de mixage (LO) de fréquence modifiable (f_{LO}) sont mixées (38) et dans lequel le signal de mixage (fᵢ₂) est transmis à un démodulateur son (44) via un filtre (40) à fréquence de passage constante, **caractérisé en ce que,** pour la reconnaissance du standard de son, la fréquence (f_{LO}) de la porteuse de mixage est automatiquement modifiée par pas et le signal de sortie du filtre (40) est transmis à un détecteur d'amplitude (42) et le signal de sortie du détecteur d'amplitude converti d'analogique en numérique (31) est analysé dans un processeur qui génère un valeur réglante caractéristique pour chaque standard de son à partir du rapport entre l'arrivée d'une porteuse en sortie du filtre (40) et la fréquence (f_{LO}) de la porteuse de mixage (LO).

2. Procédé conforme à la revendication 1 dans lequel, pour la reconnaissance du standard de son, la fréquence (f_{LO}) de la porteuse de mixage (LO) est modifiée par pas égaux à la plus petite différence de fréquence entre porteuses de son de fréquences voisines pour les différents standards.

3. Procédé conforme à la revendication 1 ou 2 dans lequel la porteuse de mixage (LO) est établie à l'aide d'un étage PLL commutable (39).

4. Procédé conforme à l'une des revendications 1 à 3 dans lequel le signal de mixage (fᵢ₂) est transmis via un filtre supplémentaire (41) de fréquence de passage constante et différente à un démodulateur son supplémentaire (45) et à un détecteur d'amplitude supplémentaire (43) dont le signal de sortie est également converti d'analogique en numérique (31) et est analysé dans le processeur.

5. Procédé conforme à l'une des revendications 1 à 4 dans lequel la porteuse MF son (fᵢ) est une porteuse son Intercarrier obtenue dans un étage de mixage (36) situé en amont.

6. Procédé conforme à l'une des revendications 1 à 5 dans lequel la valeur réglante caractérisant le standard de son sert à la commutation du mode de fonctionnement du récepteur de télévision en fonction du standard de son déterminé.

7. Procédé conforme à l'une des revendications 1 à 6 dans lequel la fréquence normale (fᵢ₂) du signal de mixage est de 500 kHz pour tous les standards de son.

8. Circuit de reconnaissance du standard de son dans un récepteur de télévision dans lequel une porteuse MF son (fᵢ) et une porteuse de mixage (LO) de fréquence modifiable (f_{LO}) sont transmises à un étage de mixage (38) dont le signal de sortie (fᵢ₂) est transmis à un démodulateur son (44) via un filtre (40) à fréquence de passage constante, **caractérisé en ce que**, pour la reconnaissance du standard de son, la fréquence (f_{LO}) de la porteuse de mixage est automatiquement modifiée par pas et le signal de sortie du filtre (40) est transmis à un détecteur d'amplitude (42) et le signal de sortie du détecteur d'amplitude converti d'analogique en numérique (31) est analysé dans un processeur qui génère un valeur réglante caractéristique pour chaque standard de son à partir du rapport entre l'arrivée d'une porteuse en sortie du filtre (40) et la fréquence (f_{LO}) de la porteuse de mixage (LO).
